# EUROPEAN PATENT SPECIFICATION

(11) **EP 3 595 814 B1**
(45) Date of publication and mention of the grant of the patent: **30.07.2025**
(21) Application number: 18720027.4
(22) Date of filing: 27.02.2018
(51) Int. Cl.: G01N 15/1404, G01N 15/14, B01L 3/00, B01L 3/02

(54) **MICROCHIP AND MICROPARTICLE MEASURING APPARATUS**
MIKROCHIP UND MIKROPARTIKELMESSVORRICHTUNG
MICRO-PUCE ET APPAREIL DE MESURE DE MICROPARTICULES

(30) Priority: 14.03.2017 JP 2017049011
(43) Date of publication of application: 22.01.2020
(73) Proprietor: Sony Group Corporation, Tokyo 108-0075 (JP)
(72) Inventor: KASAI Hiroto, Tokyo 108-0075 (JP); AKIYAMA Shoji, Tokyo 108-0075 (JP); TAKAHASHI Kazuya, Tokyo 108-0075 (JP)
(74) Representative: D Young & Co LLP
(86) International application number: PCT/JP2018/007158
(87) International publication number: WO 2018/168436

(56) References cited:
- EP-A1- 1 447 136
- WO-A1-2013/018273
- US-A1- 2011 284 378
- US-A1- 2015 114 093

## Description

### Technical Field

The present technology relates to a microchip and a microparticle measuring apparatus.

### Background Art

In recent years, microchips having a region or a flow path for chemical or biological analysis on substrates made of silicon or glass have been developed by applying fine processing technology in the semiconductor industry. An analysis system using such a microchip is referred to as a micro-Total-Analysis System (µ-TAS), a lab-on-a-chip, a biochip, and the like. The technology of the analysis system can accelerate the speed of the analysis, improve efficiency, and achieve integration, in addition, miniaturize the measuring apparatus.

Since the analysis system using the microchip described above can perform an analysis with a small amount of samples and can use disposable microchips, the analysis system is especially applied to a biological analysis using valuable microscale samples and a large number of specimens. Applications of the analysis system include, for example, an electrochemical detector of liquid chromatography and a compact electrochemical sensor in the medical field.

Furthermore, as another application, there is a microparticle measuring technique for optically, electrically, or magnetically measuring characteristics of the microparticles such as cells and microbeads in the flow path formed in the microchip. In the microparticle measuring technique, a population (group) which has been determined to satisfy a predetermined condition by measurement is separated and collected from the microparticles.

For example, PLT 1 discloses "a microchip including a flow path through which liquid flows and a discharge part for discharging the liquid to outside which are formed on the microchip, and in which a notch which has a larger diameter than an opening is provided between the position of the opening of the discharge part which is opened toward the direction of an end surface of laminated substrate layers and the end surface". Such a microchip is used for separating and collecting the microparticles which have been determined to have predetermined optical characteristics by controlling a moving direction of a droplet including the microparticle discharged from the discharge part.

### Citation List

### Patent Literature

PTL 1: JP 2013-32994A
PTL 2: US 2015/114093 A1 (APPLEYARD DAVID [US] ET AL) 30 April 2015 discloses a microfluidic system and method with focused energy apparatus.

### Summary

### Technical Problem

Many of the traditional microchips have had the flow path and the discharge part formed in the laminated substrate layers, and there has been a problem in that a misalignment in bonding occurs when the substrate layers are bonded and the shapes of the discharge parts vary. Since this problem has affected a symmetry of the shape of the droplet and a discharge angle of the droplet, it has been necessary to bond the substrate layers with high precision, and reduction in yield has been caused.

Therefore, it is desirable to provide a microchip with less manufacturing variation.

### Solution to Problem

According to the present disclosure, there is provided a microchip according to the appended claims. The microchip comprises a substrate including a flow channel configured to convey a fluid therein. The substrate comprises a first substrate layer, a second substrate layer laminated to the first substrate layer to create the flow channel, and a discharge part formed in only one of the first substrate layer or the second substrate layer. The discharge part includes an opening directed toward an end face of the substrate, and being configured to eject the fluid flowing through the flow channel.

According to the present disclosure, there is provided a microparticle measuring apparatus. The microparticle measuring apparatus comprises a microchip comprising a substrate including a flow channel configured to convey a fluid therein. The substrate comprises a first substrate layer, a second substrate layer laminated to the first substrate layer to create the flow channel, and a discharge part formed in only one of the first substrate layer or the second substrate layer. The discharge part includes an opening directed toward an end face of the substrate, and being configured to eject the fluid flowing through the flow channel.

### Advantageous Effects of Invention

According to the present technology, it is possible to provide a microchip with less manufacturing variation. Note that the effects described herein are not limited and that the effect may be any effects described in the present disclosure.

### Brief Description of Drawings

Figs. 1A and 1B are schematic diagrams of an exemplary configuration of a microparticle measuring apparatus A according to an embodiment of the present technology.
[fig.2]Fig. 2 is a schematic diagram of an exemplary configuration of the microparticle measuring apparatus A according to the embodiment of the present technology.
[fig.3]Fig. 3 is a schematic diagram of an exemplary configuration of the microparticle measuring apparatus A according to the embodiment of the present technology.
[fig.4]Fig. 4 is a schematic diagram of an exemplary configuration of the microparticle measuring apparatus A according to the embodiment of the present technology.
[fig.5]Figs. 5A and 5B are schematic diagrams of an exemplary configuration of a microchip 1 according to the embodiment of the present technology.
[fig.6]Fig. 6 is an enlarged view of a portion (refer to Q in Fig. 5A) surrounded by a broken line in Fig. 5A.
[fig.7]Fig. 7 is an enlarged view of a portion R-R in Fig. 5B.
[fig.8]Fig. 8 is a schematic diagram of an exemplary configuration of a discharge part 12 in a front view viewed from a discharge direction.
[fig.9]Fig. 9A and 9B are diagrams of states in which shapes of droplets made to be different from each other according to a difference between shapes of the discharge parts have been confirmed.
[fig.10]Fig. 10 is a schematic diagram of a state of a droplet D discharged from the discharge part 12.
[fig.11] Fig. 11 is a schematic diagram of a microparticles sorting operation by the microparticle measuring apparatus A according to the embodiment of the present technology.
[fig.12]Figs. 12A and 12B are schematic diagrams of exemplary shapes of a discharge part of a traditional microchip.
[fig.13]Fig. 13 is a schematic diagram of an exemplary configuration of the discharge part 12 in a front view viewed from the discharge direction, with a space formed by first and second cavity forming parts that form the orifice of the discharge part.

### Description of Embodiments

Preferred embodiments for carrying out the present technology will be described below with reference to the drawings. The embodiment described herein is an example of a representative embodiment of the present technology, and the scope of the present technology is not narrowly interpreted based on the embodiment.

Note that, the description will be in the following order.
1. Microparticle measuring apparatus A
2. Microchip 1
3. Operation of Microparticle Measuring Apparatus A

### 1. Microparticle measuring apparatus A

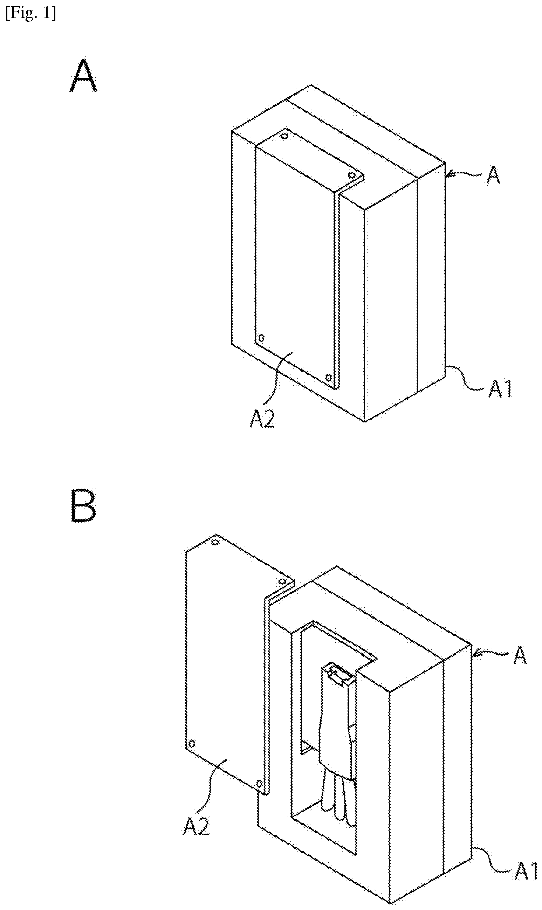

First, a microparticle measuring apparatus A according to an embodiment of the present technology will be described in detail. In the microparticle measuring apparatus A, a microchip 1 according to the embodiment of the present technology to be described later is mounted. Figs. 1A to 4 are schematic diagrams schematically illustrating an exemplary configuration of the microparticle measuring apparatus A according to the embodiment of the present technology.

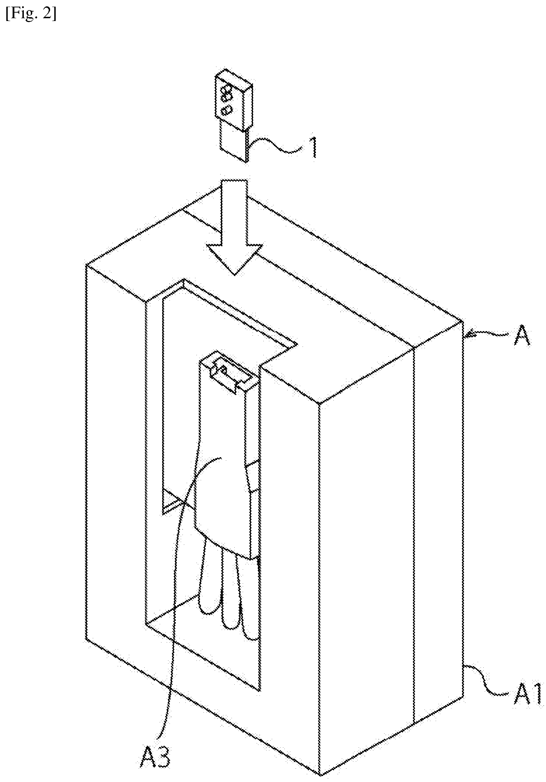

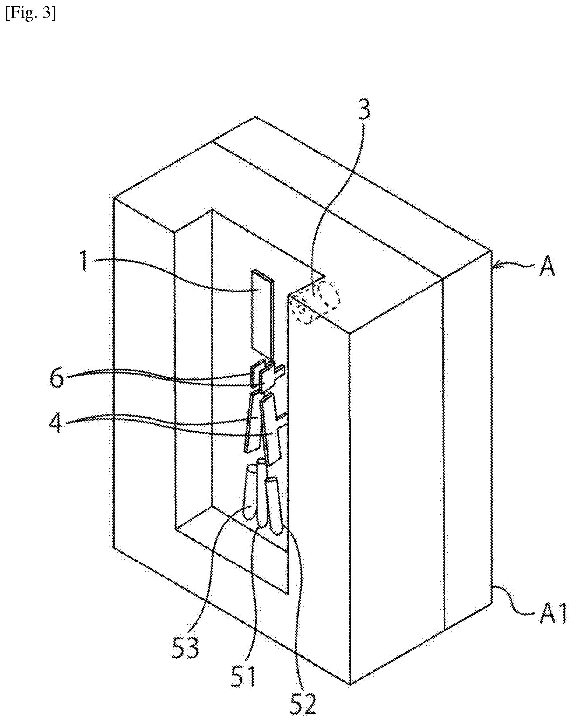

The microparticle measuring apparatus A includes a microparticle sorting area protected by a cover A2 of a main body A1, and in addition, protected by a sorting cover A3. The microparticle sorting area includes the microchip 1 to be described later which is inserted and attached in an upper opening of the sorting cover A3. A block arrow in Fig. 2 indicates an insertion direction of a microchip module including the microchip 1 as a component into the sorting cover A3. Note that, in Fig. 3, for convenience, the illustration of the sorting cover A3 is omitted. In addition, the illustration of parts of the microchip module inserted into the sorting cover A3 other than the microchip 1 is omitted.

The microparticle sorting area includes the microchip 1, an optical detection unit 3 which irradiates a predetermined portion of the microchip 1 with light, a pair of counter electrodes 4, and three collection parts (containers 51, 52, and 53). The optical detection unit 3 and the counter electrodes 4 are disposed in the main body A1, and the containers 51 to 53 are detachably attached to the main body A1. Note that, in Figs. 1A to 4, the number of containers is set to be three for convenience. However, the number is not limited to this in the present technology.

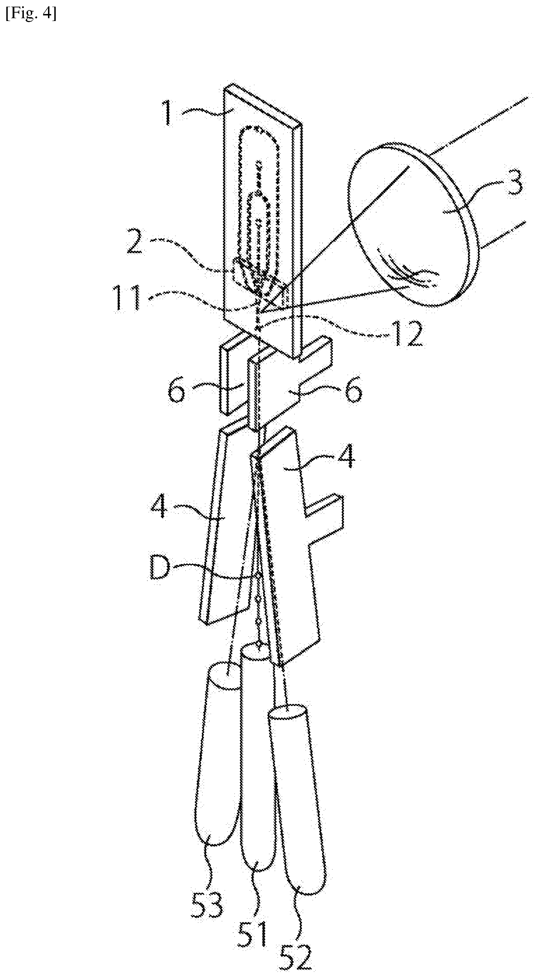

The configuration of the microparticle sorting area will be described in detail with reference to Fig. 4. In Fig. 4, the microchip 1, the optical detection unit 3, the counter electrodes 4, and the containers 51 to 53 are illustrated. In Fig. 4, a reference numeral 2 denotes a vibration element disposed on the microchip 1, and reference numerals 6 denote ground electrodes which are grounded.

In the microchip 1, as will be described later, a flow path 11 (also referred to as a flow channel) through which liquid (sample liquid) including microparticle to be sorted flows is formed. The optical detection unit 3 irradiates a predetermined portion of the flow path 11 with light (measurement light) and detects light (measurement target light) generated from the microparticle passing through the flow path 11. Hereinafter, the portion irradiated with the measurement light from the optical detection unit 3 in the flow path 11 is referred to as a "light irradiation portion".

The optical detection unit 3 can have a configuration similar to that of a traditional microparticle measuring apparatus. Specifically, for example, the optical detection unit 3 includes a laser light source, an irradiation system including a condensing lens and a dichroic mirror for collecting a laser beam from the microparticle or irradiating the microparticles with the laser beam, and a band-pass filter, and a detection system for detecting the measurement target light generated from the microparticles by irradiating the microparticles with the laser beam. The detection system includes, for example, a photo multiplier tube (PMT), an area image pickup element such as a CCD or a CMOS element. Note that only the condensing lens is illustrated as the optical detection unit 3 in Fig. 4. Furthermore, in Fig. 4, a case is illustrated where the irradiation system and the detection system are formed with the same optical path. However, the irradiation system and the optical path may have different optical paths from each other.

The measurement target light to be detected by the detection system of the optical detection unit 3 is light which is generated from the microparticle by the irradiation with the measurement light, and for example, the measurement target light can be scattering light such as forward scattering light, side scattering light, Rayleigh scattering, and Mie scattering and fluorescence. These measurement target light is converted into an electric signal, and optical characteristic of the microparticle is detected on the basis of the electric signal.

The sample liquid which has passed through the light irradiation portion is ejected from the discharge part 12 provided at one end of the flow path 11 to a space outside the chip. At this time, by vibrating the microchip 1 with a vibration element 2 such as a piezo element, the sample liquid can be formed into droplets and discharged to the space outside the chip. In Fig. 4, a reference numeral D denotes the droplet which has discharged to the space outside the chip.

A droplet D includes the microparticle to be sorted. The counter electrodes 4 are disposed along a moving direction of the droplets discharged to the space outside the chip and are provided to be opposed to each other with the moving droplets interposed therebetween. A charge is applied to the discharged droplet by a charging unit which is not shown, and the counter electrodes 4 control the moving direction of the droplet by electric repulsion (or suction force) with the charge applied to the droplet, and guides the droplet to any one of the containers 51 to 53.

In the microparticle measuring apparatus A, by controlling the moving direction of the droplet including the microparticle by the counter electrodes 4 on the basis of the optical characteristic of the microparticle detected by the optical detection unit 3, it is possible to collect and sort the microparticle having desired characteristic into any one of the containers 51 to 53.

Furthermore, in the microparticle measuring apparatus A, the optical detection unit 3 may be replaced with, for example, an electric or magnetic detection unit. In a case where the characteristic of the microparticle is electrically or magnetically detected, microelectrodes are disposed on both sides of the flow path 11 to be opposed to each other to measure a resistance value, a capacitance value, an inductance value, an impedance, a change value of an electric field between electrodes, a change in the magnetization, a change in a magnetic field, or the like. In this case, the microparticles are sorted on the basis of the electrical or magnetic characteristics of the microparticles.

### 2. Microchip 1

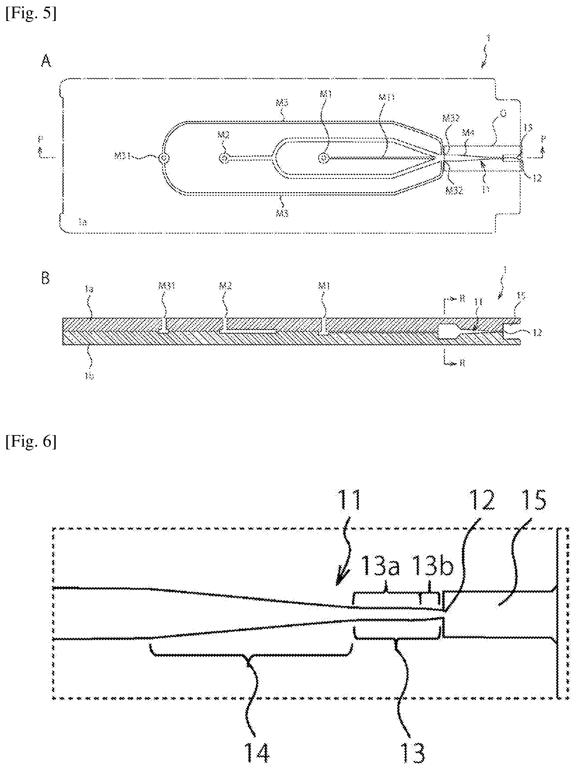

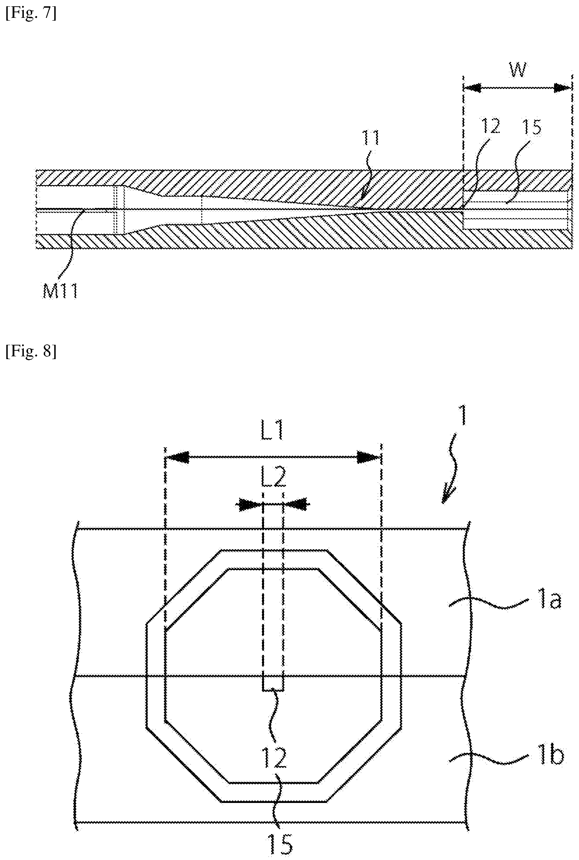

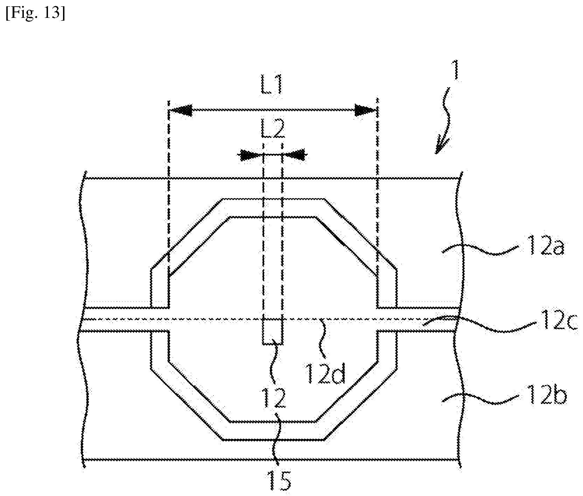

Next, the microchip 1 according to the embodiment of the present technology will be described in detail. Figs. 5A and 5B are schematic diagrams of an exemplary configuration of the microchip 1 according to the embodiment of the present technology. Fig. 5A is a schematic top view, and Fig. 5B is a schematic cross-sectional view corresponding to a P-P cross section in Fig. 5A. Furthermore, Fig. 6 is an enlarged view of a portion (refer to Q in Fig. 5A) surrounded by a broken line in Fig. 5A, and Fig. 7 is an enlarged view of a portion R-R in Fig. 5B. In addition, Fig. 8 is a schematic diagram of an exemplary configuration of the discharge part 12 in a front view viewed from the discharge direction. Further, Fig. 13 is a schematic diagram of an exemplary configuration of the discharge part 12 in a front view viewed from the discharge direction, with a space 12C formed by first and second cavity forming parts 12a and 12b that form the orifice of the discharge part 12.

The microchip 1 includes at least the flow path 11 through which liquid flows and the discharge part 12 for discharging the liquid flowing through the flow path 11 to the outside. The flow path 11 and the discharge part 12 are formed in laminated substrate layers, and as illustrated in Figs. 7, 8 and 13, the discharge part 12 is formed in one of the two substrate layers. Furthermore, in the present technology, the microchip 1 may further include a detection area 13, a tapered part 14, a cavity 15, and the like, as necessary.

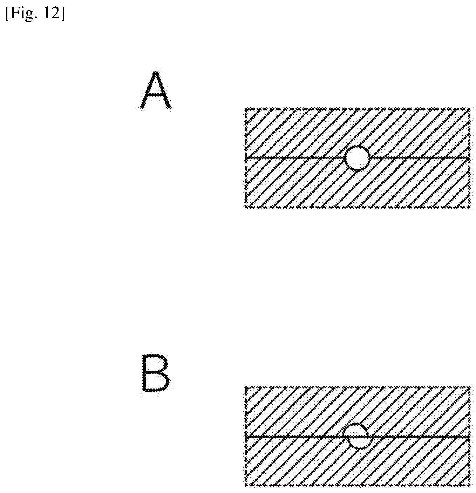

In a traditional microchip, a cross section of a discharge part is completely symmetrical in the laminated horizontal direction of the substrate layer. For example, a microchip disclosed in PTL 1 (JP 2013-32994A) has a discharge part having a semicircular shape as illustrated in A of Fig. 12, and the discharge part is designed to have a circular shape when substrate layers are laminated. However, a misalignment in bonding may occur when the substrate layers are bonded, and for example, as illustrated in B of Fig. 12, the semicircular shapes are shifted from each other, and this affects a symmetry of the shape of the droplet and a discharge angle of the droplet. Therefore, it has been necessary to bond the substrate layers with high precision, and reduction in yield has been caused.

On the other hand, according to the embodiment of the present technology, since the discharge part 12 is formed in only one of the substrate layers, a problem of the misalignment is eliminated, and a problem in the yield is improved. Therefore, a microchip with less manufacturing variation and performance variation reduced by the less manufacturing variation can be provided.

In the present technology, it is preferable that the shape of the discharge part 12 in the front view from the discharge direction be a polygon that is bilaterally symmetrical in a direction perpendicular to the substrate layer. This is because if the discharge part 12 has a circular shape, it is very difficult to process a mold and to mirror finish the surface. Therefore, there has been a risk in manufacturing a repeat mold with high repeatability. In this way, it is possible to process the mold with higher precision, and the manufacturing variation and the performance variation caused by the manufacturing variation can be suppressed. Furthermore, if the discharge part 12 is formed in a circular shape, the light is scattered. Therefore, the detection area 13 to be described later becomes small. Therefore, by forming the discharge part 12 in such a shape, limitation of the detection area 13 to be described later can be prevented.

The specific shape of the discharge part 12 in a front view viewed from the discharge direction is a quadrangle. In this way, it is possible to process the mold with higher precision, and the manufacturing variation and the performance variation caused by the manufacturing variation can be suppressed. Note that, here, the quadrangle naturally includes a trapezoid, a rectangle, and a square.

Furthermore, the specific shape of the discharge part 12 in a front view viewed from the discharge direction is preferably a rectangle or a square. The reason will be described in detail later.

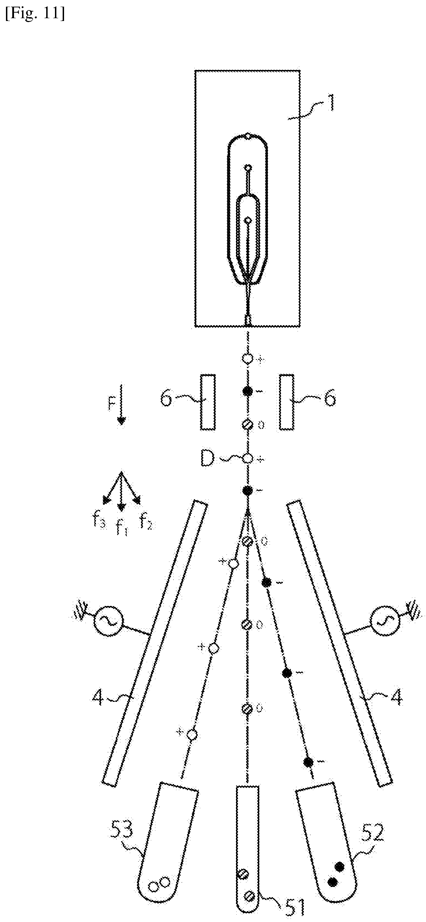

Fig. 11 is a schematic diagram to describe a microparticles sorting operation by the microparticle measuring apparatus A and illustrates a state where the droplet is formed from the microchip set in the microparticle measuring apparatus. The length from a point where the droplet is discharged from the discharge part of the microchip to a point where the droplet is formed is referred to as a break off point (referred to as "BOP" below). Here, traditionally, it has been known that the stability of the BOP is very important as the performance of the microparticle measuring apparatus.

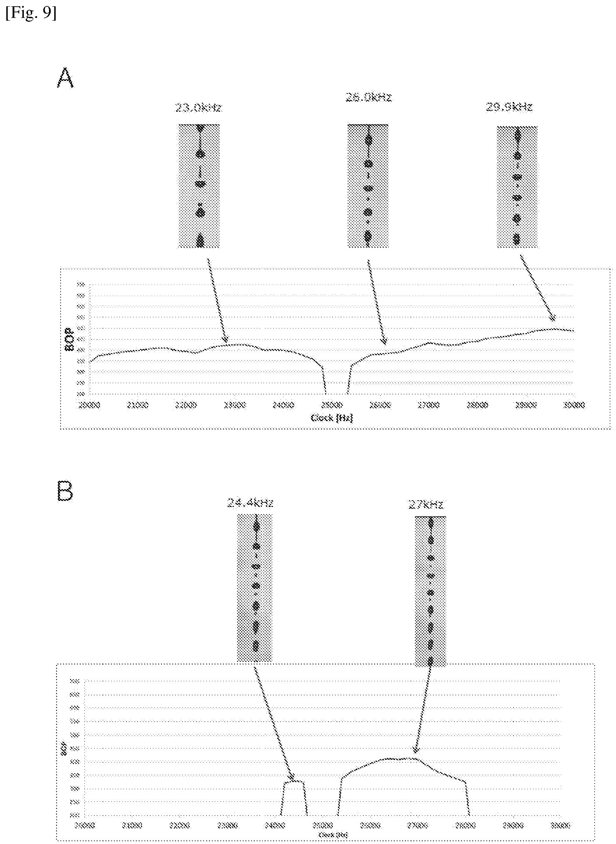

Fig. 9A and 9B are diagrams of states in which the shapes of the droplets made to be different from each other according to a difference between the shapes of the discharge parts have been confirmed. Fig. 9A illustrates a state in which the shape of the droplet discharged by using the discharge part 12 having the shape (quadrangle) according to the embodiment of the present technology is confirmed, and Fig. 9B illustrates a state in which the shape of the droplet discharged by using the discharge part 12 having a traditional shape is confirmed. In graphs illustrated in A and B of Fig. 9, the vertical axis represents a height (a. u.) of the BOP, and the horizontal axis represents a frequency (Hz) a piezoelectric element.

Based on the results illustrated in Figs. 9A and 9B, it can be found that the droplets are neatly formed regardless of the shape of the discharge part 12. However, as illustrated in A of Fig. 9, under the same tank pressure condition relative to the liquid, a frequency band in which the droplet is stably formed is wider in a case where the shape (quadrangle) of the discharge part according to the embodiment of the present technology. Furthermore, since the height of the BOP depends on the fluctuation in the flow rate of the chip, even when the flow rate is adjusted by adjusting a bonding condition of the substrate layers, the stability of the droplet relative to the frequency is better in a case of the shape (quadrangle) of the discharge part according to the embodiment of the present technology.

Furthermore, as illustrated in B of Fig. 9, with the shape of the traditional discharge part 12, only a slow satellite can be formed in which a following main droplet catches up with a small droplet. However, as illustrated in A of Fig. 9, with the shape (quadrangle) of the discharge part according to the embodiment of the present technology, both a fast satellite, in which a small droplet catches up with a preceding main droplet and the slow satellite can be formed.

Furthermore, here, the "satellite" is a small droplet formed when a thin bar-shaped liquid column stretched backward after the droplet has been discharged is separated from the main droplet and a nozzle by surface tension. Since the satellite causes a charge fluctuation of the droplets, it has been known that the satellite is one of parameters, which should be controlled, for the microparticle measuring apparatus which may require accuracy of a deflection position of the droplet such as an inkjet printer and a sorter.

In comparison with a case where the slow satellite is formed, a margin against the charge fluctuation is provided by forming the fast satellite. Therefore, a side stream is stabilized, and an effect is obtained in which splashes can be reduced. According to the embodiment of the present technology, as illustrated in A of Fig. 9, since both the fast satellite and the slow satellite can be stably and selectively used according to frequency conditions, the present technology is more useful than the traditional technology in which only the slow satellite can be formed.

In the present technology, the length of one side of the discharge part 12 is not especially limited. However, it is preferable that the length of the side of the discharge part 12 be 50 µm to 300 µm. With this configuration, the microparticle measuring apparatus A described above can be preferably used.

Furthermore, as described above, the specific shape of the discharge part 12 in a front view viewed from the discharge direction is a quadrangle. However, a square shape may be rounded (roundness: R) according to processing accuracy of the mold. In this case, an angle R which is one% to 20% of the length of one side may be expected.

The microchip 1 according to the embodiment of the present technology is, for example, formed by bonding substrate layers 1a and 1b in which the flow path 11 has been formed. The flow path 11 can be formed in the substrate layers 1a and 1b by performing injection molding to a thermoplastic resin by using a mold. Note that the flow path 11 is formed in both of the substrate layers 1a and 1b.

As the thermoplastic resin, a material such as polycarbonate, polymethylmethacrylate resin (PMMA), cyclic polyolefin, polyethylene, polystyrene, polypropylene, and polymethyldisilazane (PDMS) which are known as traditional materials of the microchip can be appropriately and freely selected.

The injection molding can be performed by a known traditional method. For example, in a case where polyolefin (ZEONEX1060R, Zeon Corporation) is injection-molded by using an injection molding apparatus (SE75DU manufactured by Sumitomo Heavy Industries, Ltd.), conditions including a resin temperature of 270°C, a temperature of the mold of 80°C, and a mold clamping force of 500 kN are used as a typical molding condition.

In this way, in the microchip 1 according to the embodiment of the present technology, the flow path 11 and the discharge part 12 can be formed by applying the injection molding and thermocompression bonding to the thermoplastic resin without polishing expensive quartz, ceramics such as alumina and zirconia. Therefore, the microchip 1 according to the embodiment of the present technology is inexpensive and has excellent productivity.

Furthermore, the substrate layers 1a and 1b in which the flow path 11 has been formed can be bonded to each other by thermocompression bonding with a known traditional method. For example, in a case where the polyolefin substrate layer described above is thermocompression-bonded by using a nanoimprint apparatus (Canon Inc., Eitre 6/8), typical compression bonding conditions include a bonding temperature of 95°C and a pressing force of 10 kN, and the substrate layers are pressed under this condition for several minutes.

The sample liquid is introduced from a sample inlet M1, is joined with sheath liquid introduced from a sheath inlet M2, and is sent through the flow path 11. After being divided into two directions and sent, the sheath liquid introduced from the sheath inlet M2 is joined with the sample liquid so as to sandwich the sample liquid from two directions at a junction with the sample liquid introduced from the sample inlet M1. With this configuration, a three-dimensional laminar flow in which a sample liquid laminar flow is positioned between the sheath liquid laminar flows is formed at the junction. As shown in FIG. 5, the sample inlet M1 introduces a sample into a sample channel M11. As shown in FIG. 7, the sample channel M11 is formed in the same substrate layer in which the discharge part 12 is formed, such that the sample flow from the sample channel M11 flows straight from the sample channel M11 through the flow path 11 to the orifice of the discharge part 12. Thus, with this configuration the sample flow does not bend as it flows from the sample channel M11 to the discharge part 12.

A reference numeral M3 denotes a suction flow path for temporarily reversing the flow by applying a negative pressure in the flow path 11 to eliminate a clogging and bubbles when the clogging or the bubbles occur in the flow path 11. A suction outlet M31 which is connected to a negative pressure source such as a vacuum pump is formed at one end of the suction flow path M3, and the other end of the suction flow path M3 is connected to the flow path 11 at a communication port M32.

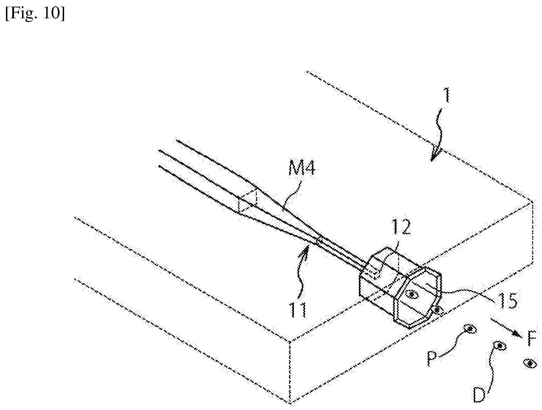

Regarding the three-dimensional laminar flow, the width of the laminar flow is narrowed in a narrowing portion M4 (refer to Figs. 5 and 10) which has been formed so that the area of the cross section perpendicular to the flow direction of the liquid is gradually or stepwisely decreased from the upper stream to the down stream in the flow direction of the liquid. After that, the three-dimensional laminar flow is discharged from the discharge part 12 provided at one end of the flow path. In Fig. 10, the droplets D discharged from the discharge part 12 to the space outside the chip are illustrated. In Fig. 10, a reference numeral P denotes the microparticles, and a reference numeral F denotes the discharge direction of the droplet D from the discharge part 12.

In the present technology, as illustrated in Fig. 6, a connection part of the flow path 11 to the discharge part 12 further includes the detection area 13 where the sample flowing through the flow path 11 is optically detected, and it is assumed that the depth of the flow path from the detection area 13 to the discharge part 12 be constant. The detection area 13 has a constant width portion 13a and a contracted portion 13b with a width that decreases continuously from the constant width portion 13a towards the discharge part 12. With this configuration, the detection can be performed at any position as long as the position is between the start point of the detection area 13 and the discharge part 12. Furthermore, regarding the performance, as the detection position gets closer to the discharge part 12, variation in speed due to the type and size of the cells is reduced.

Furthermore, in the present technology, as illustrated in Fig. 6, it is preferable that the flow path 11 further include the tapered part 14 communicating with the detection area 13. This can reduce the variation in speed due to the type and size of the cells.

As described above, the discharge part 12 is formed in either one of the substrate layers 1a or 1b, that is, the discharge part 12 is opened to an end surface direction of one of the substrate layers, and the microchip 1 according to the embodiment of the present technology may further include the cavity 15 which communicates with the discharge part 12 and spatially covers the droplet discharged from the discharge part 12. The cavity 15 can be formed, for example, by cutting out the substrate layers 1a and 1b between the discharge part 12 and the substrate end surface so that a diameter L1 of the cavity 15 becomes larger than a diameter L2 of the discharge part 12 (refer to Figs. 8 and 13).

Since the microchip 1 according to the embodiment of the present technology includes the cavity 15, irregularities or deformation of the shapes of the discharge part 12 and the flow path 11 due to the injection molding and the thermocompression bonding of the substrate layers are prevented. Therefore, in the microchip 1 according to the embodiment of the present technology, droplets having a certain size and shape can be discharged straight in a certain direction from the discharge part 12 having a uniform shape. In addition, since the discharge part 12 does not exist on the end surface of the chip, breakage of the discharge part 12 due to an unexpected contact or the like in a manufacturing process hardly occurs, and high productivity can be obtained.

As illustrated in Figs. 8 and 13, it is preferable that the diameter L1 of the cavity 15 be formed to be equal to or more than twice of the diameter L2 of the discharge part 12 so as not to hinder the movement of the droplets discharged from the discharge part 12. However, if the diameter L1 of the cavity 15 is excessively increased, uniformity of a heat distribution and a pressure distribution at the time of applying the thermocompression bonding to the substrate layers 1a and 1b deteriorates, or "gas" is accumulated in the cavity 15. This causes the irregularity of the shape of the discharge part 12.

In Figs. 8, 10 and 13, a case is illustrated in which the cavity 15 is formed by cutting out the substrate layers 1a and 1b in an octagonal prism shape. However, in the present technology, the shape of the cavity 15 is not especially limited as long as the cavity 15 can spatially cover the droplet discharged from the discharge part 12. Furthermore, although it is preferable that the cavity 15 be provided coaxially with the discharge part 12, the position of the cavity 15 is not limited thereto. Furthermore, in a case where the microchip 1 is thin, the cavity 15 may be formed by cutting out the entire length of the substrate layers 1a and 1b in the thickness direction. In some embodiments, the orifice of the discharge part 12 can be defined by two cavity forming parts 12a, 12b shown in Fig. 13, which are thinner than the thickness of substrates 1a, 1b used to form the channels in the microchip 1. Fig. 13 shows some aspects discussed in conjunction with Fig. 8, including that the diameter L1 of the cavity 15 is much larger than the diameter L2 of the discharge part 12. Referring to Fig. 13, since the cavity forming parts 12a, 12b are thinner than the thickness of the substrate 1a, 1b, when the substrates 1a, 1b of the microchip 1 are joined (e.g., bonded, cured, and/or formed by controlling the depth) together with a bond surface 12d, the cavity forming parts 12a, 12b that form the cavity of the discharge part 12 will not bond or contact with each other. Thus, a space 12c is between the inner sides of the cavity forming parts 12a, 12b of the discharge part 12. For example, if the cavity forming parts 12a and 12b have the same thickness with the substrate 1a, 1b, it may cause the connection portion of the microchip 1 and the discharge part 12 to not be able to bond completely. In order to ensure the substrates 1a, 1b having flow channel structures bond completely, the substrates of discharge part can be designed thinner than the substrate of microchip 1, and will thus not bond together.

Here, traditionally, it has been known that a molding defect called as a "burr" or a "dripping" occurs in a portion of the thermoplastic resin having contact with the mold when the substrate layer is injection-molded. Furthermore, in particular, the "gas" generated at the time of molding significantly deforms the shape of the end surface of the substrate layer and the periphery thereof after molding. Therefore, in a case where the discharge part 12 is provided on the end surface of the substrate layer, the shape of the discharge part 12 tends to be irregular due to the influence of the molding defect.

Therefore, in the present technology, by providing the cavity 15 in the microchip 1, the discharge part 12 is provided at a position recessed by a predetermined length from the end surface of the substrate layer. As a result, even if the molding defect occurs at the end surface of the substrate layer and the periphery thereof, the molding defect does not affect the shape of the discharge part 12. Therefore, in the microchip 1, it is possible to stably form the shape of the discharge part 12 in a desired shape, and the droplet having a certain size and shape can be discharged from the discharge part 12.

It is preferable that the length from the discharge part 12 to the end of the cavity 15 (refer to W in Fig. 7) be equal to or longer than 0.2 mm. With this length, it is possible to completely eliminate the influence of the molding defect which occurs on the end surface of the substrate layer and the periphery thereof. Furthermore, in this case, the size of the microchip 1 according to the embodiment of the present technology is not especially limited, for example, the size of the microchip 1 may have the width of 75 mm × the length of 25 mm × the thickness of 2 mm.

In addition, traditionally, it has been known that the deformation caused by heat shrinkage has become larger on the end surface of the substrate layer and the periphery thereof than that at the center of the substrate layer at the time when the substrate layers are thermo-compressed. Therefore, in a case where the discharge part 12 and the flow path connected to the discharge part 12 are provided in the end surface of the substrate and the periphery thereof, the shapes of the discharge part 12 and the flow path molded by the heat shrinkage are easily deformed.

On the other hand, according to the embodiment of the present technology, by providing the cavity 15 in the microchip 1, the discharge part 12 is provided at a position on the predetermined length inner side from the end surface of the substrate layer. As a result, the shape of the discharge part 12 and the shape of the detection area 13 connected to the discharge part 12 are not deformed at the time when the thermocompression bonding is applied to the substrate layer. Therefore, in the microchip 1, it is possible to maintain the shapes of the discharge part 12 and the detection area 13 in desired shapes and to discharge the droplet D having a certain size and shape straight from the discharge part 12.

The application of the microchip 1 according to the embodiment of the present technology is not especially limited. However, as will be described later, the microchip 1 is preferably used to measure the microparticles.

### 3. Operation of Microparticle Measuring Apparatus A

Finally, the operation of the microparticle measuring apparatus A will be described with reference to Fig 11.

The sample liquid and the sheath liquid which have passed through the light irradiation portion of the flow path 11 are discharged from the discharge part 12 to the space outside the chip. In the light irradiation portion, the optical detection unit detects the optical characteristics of the microparticles and simultaneously detects a flow rate of the microparticles and intervals between the microparticles. The optical characteristic, the flow rate, the interval, and the like of the microparticle which have been detected are converted into electrical signals and output to a general control unit (not shown) of the apparatus. The general control unit controls the frequency of the vibration element 2 (refer to Fig. 4) on the basis of the signal and vibrates the microchip 1 so that a single microparticle P is included in the droplet D which is formed in the discharge part 12.

In addition, the general control unit switches the polarity of the charge to be applied to the sheath liquid and the sample liquid passing through the flow path 11 in synchronization with the vibration frequency of the vibration element 2 and applies a positive or negative charge to the droplet D which is formed in the discharge part 12.

The optical characteristic of the microparticle detected by the optical detection unit is converted into the electrical signal and output to the general control unit. The general control unit determines the charge to be applied to the droplet according to the optical characteristic of the microparticle included in each droplet on the basis of the signal. Specifically, for example, the general control unit positively charges the droplet including the microparticle to be sorted having desired characteristic and negatively charges the droplet which does not include the microparticle to be sorted.

At this time, to stabilize the charged state of the droplet D, in the microparticle measuring apparatus A, ground electrodes 6 are arranged near the discharge part 12 and along the moving direction of the droplet discharged to the space outside the chip. The ground electrodes 6 are disposed to be opposed to each other with the moving droplets interposed therebetween and disposed between the counter electrodes 4 which control the moving direction of the microparticles and the discharge part 12.

The moving direction of the charged droplet D discharged from the discharge part 12 is controlled by an electric force acting between the droplet D and the counter electrodes 4. In this case, to accurately control the moving direction, it is necessary to apply the stable charge to the droplet. Since a very high voltage is applied to the counter electrode 4, if the high potential of the counter electrode 4 affects the charge applied to the droplet D, the charged state of the droplet D may become unstable. Therefore, in the microparticle measuring apparatus A, the influence of the high potential of the counter electrodes 4 is eliminated by arranging the ground electrodes 6 which are grounded between the discharge part 12 and the counter electrodes 4.

The moving direction of the droplet D discharged from the discharge part 12 is controlled, for example, as follows. That is, in the above example in which the droplet including the microparticle to be sorted having desired characteristic is positively charged and the droplet which does not include the microparticle to be sorted is negatively charged, the microparticle to be sorted can be sorted into the container 53 by positively charging one of the counter electrodes 4 and negatively charging the other counter electrode 4. More specifically, the droplet including the microparticle to be sorted which has been positively charged is controlled to move in the direction of an arrow f3 and is guided into the container 53 by the electric repulsion with one of the counter electrodes 4 and the electric suction force with the other counter electrode 4. On the other hand, the droplet which does not include the microparticle to be sorted which has been negatively charged is controlled to move in the direction of an arrow f2 and is guided into the container 52.

Alternatively, for example, if the charge is not applied to the droplet including the microparticle to be sorted having the desired characteristic and the droplet which does not include the microparticle to be sorted is positively or negatively charged and the counter electrodes 4 are positively or negatively charged, the microparticle to be sorted can be sorted into the container 51. In addition, a combination of the charge to be applied to the droplet D and the control of the moving direction of the droplet by the counter electrode 4 can be variously set similarly to a traditional flow cytometry. Furthermore, in the microparticle measuring apparatus A, two or more containers to collect the droplet D are usually provided. However, although three containers are provided in Fig. 11, the number of the containers is not limited to three. In addition, these containers may be formed as a discharge path for discharging the collected droplets without storing them, and the collected microparticles which are not the sorting targets may be discarded.

As described above, in the microchip 1, the droplet D having a certain size and shape can be discharged straight in a certain direction from the discharge part 12 having a uniform shape. Therefore, in the microparticle measuring apparatus A, it is possible to control the moving direction of the droplet D with high accuracy, and it is possible to accurately sort the microparticle having the desired characteristic.

Here, a case is described where the positive or negative charge is switched and applied to the droplet D on the basis of the characteristic of the microparticle included in the droplet and the droplet D is sorted as an example. However, regarding the sort of the droplet, even in a case where the optical detection unit is replaced with an electric or magnetic detection unit, by similarly controlling the moving direction of the droplet based on the electric or magnetic characteristic of the microparticle, the microparticles having the desired characteristic can be collected and sorted into any one of the containers 51 to 53.

### Reference Signs List

1 microchip
11 flow path
12 discharge part
12a first cavity forming part
12b second cavity forming part
12c space
13 detection area
13a a constant width portion
13b a contracted portion
14 tapered part
15 cavity
1a, 1b substrate layer
M1 sample inlet
M2 sheath inlet
M3 suction flow path
M11 sample channel
M31 suction outlet
M32 communication port
M4 narrowing portion
2 vibration element
3 optical detection unit
4 counter electrode
51, 52, 53 collection part (container)
6 ground electrode
A microparticle measuring apparatus
A1 main body
A2 cover
A3 sorting cover
D droplet
P microparticle

## Claims

1. A microchip (1) comprising:
a substrate including a flow channel configured to convey a fluid therein, the substrate comprising:
a first substrate layer (1a);
a second substrate layer (1b) laminated to the first substrate layer (1a) to create the flow channel, the flow channel comprising a first portion formed in the first substrate layer (1a) and a second portion formed in the second substrate layer (1b); and
a discharge part (12) being formed in only one of the first substrate layer (1a) or the second substrate layer (1b), the discharge part (12):
including an opening directed toward an end face of the substrate; and
being configured to eject the fluid flowing through the flow channel, **characterized in that** the discharge part (12) has a quadrangular shape.

2. The microchip (1) of claim 1, wherein the discharge part (12) is configured to eject the fluid to a cavity (15).

3. The microchip (1) of claim 1, wherein the discharge part (12) is bilaterally symmetrical in a direction perpendicular to the first and second substrate layers (1a, 1b).

4. The microchip (1) of claim 1, wherein the flow channel comprises a tapered portion (14).

5. The microchip (1) of claim 1, wherein:
the flow channel comprises a first end distal to the discharge part (12) and a second end proximate to the discharge part (12);
the discharge part (12) is formed in the second substrate layer (1b); and
the first portion of the flow channel tapers as it extends from the first end to the second end, such that the first portion ends before the discharge part (12).

6. The microchip (1) of claim 1, further comprising:
a sample inlet (M1) used to introduce a sample into a sample channel (M11), wherein the sample channel (M11) is formed in only the one of the first substrate layer (1a) or the second substrate layer (1b) in which the discharge part (12) is formed, such that the sample flow from the sample channel (M11) flows straight from the sample channel (M11) through the flow channel to the opening.

7. The microchip (1) of claim 1, the substrate comprising:
a first cavity forming part (12a) forming an end portion of the first substrate layer (1a); and
a second cavity forming part (12b) forming an end portion of the second substrate layer (1b);
wherein an inner side of the first cavity forming part (12a) is spaced from an inner side of the second cavity forming part (12b).

8. The microchip (1) of claim 7, wherein:
the first cavity forming part (12a) is mounted to the first substrate layer (1a), such that the first cavity forming part (12a) extends away from the first substrate layer (1a) in a direction parallel to the first and second substrate layers (1a, 1b); and
the second cavity forming part (12b) is mounted to the second substrate layer (1b), such that the second cavity forming part (12b) extends away from the second substrate layer (1b) in a direction parallel to the first and second substrate layers (1a, 1b).

9. The microchip (1) of claim 7, wherein a cavity (12c) is formed by the inner side of the first cavity forming part (12a) and the inner side of the second cavity forming part (12b).

10. The microchip (1) of claim 9, wherein:
a first portion of the cavity (12c) is formed in the inner side of the first cavity forming part (12a); and
a second portion of the cavity is formed in the inner side of the second cavity forming part (12b).

11. The microchip (1) of claim 10, wherein:
the first portion and the second portion of the cavity are bilaterally symmetrical in a first direction perpendicular to the first and second substrate layers (1a, 1b); and
the first portion and the second portion of the cavity are bilaterally symmetrical in a second direction parallel to the first and second substrate layers (1a, 1b).

12. The microchip (1) of claim 10, wherein:
a first length of the cavity in a first direction perpendicular to the first and second substrate layers (1a, 1b) is longer than a first length of the discharge part (12) in the first direction;
a second length of the cavity in a second direction parallel to the first and second substrate layers (1a, 1b) is longer than a second length of the discharge part (12) in the second direction; or both.

13. A microparticle measuring apparatus, comprising:
a microchip (1) according to claim 1.

## Patentansprüche

1. Mikrochip (1), umfassend:
ein Substrat mit einem Strömungskanal, der konfiguriert ist, um ein Fluid darin zu befördern, das Substrat umfassend:
eine erste Substratschicht (1a);
eine zweite Substratschicht (1b), die auf die erste Substratschicht (1a) laminiert ist, um den Strömungskanal zu schaffen, wobei der Strömungskanal einen ersten Abschnitt, der in der ersten Substratschicht (1a) ausgebildet ist, und einen zweiten Abschnitt, der in der zweiten Substratschicht (1b) ausgebildet ist, umfasst; und
einen Auslassteil (12), der nur in der ersten Substratschicht (1a) oder der zweiten Substratschicht (1b) ausgebildet ist, wobei der Auslassteil (12):
eine Öffnung, die auf eine Endfläche des Substrats gerichtet ist, einschließt; und
konfiguriert ist, um das durch den Strömungskanal fließende Fluid auszustoßen, **dadurch gekennzeichnet, dass** der Auslassteil (12) eine viereckige Form aufweist.

2. Mikrochip (1) nach Anspruch 1, wobei der Auslassteil (12) konfiguriert ist, um das Fluid in einen Hohlraum (15) auszustoßen.

3. Mikrochip (1) nach Anspruch 1, wobei der Auslassteil (12) in einer Richtung senkrecht zu der ersten und der zweiten Substratschicht (1a, 1b) bilateral symmetrisch ist.

4. Mikrochip (1) nach Anspruch 1, wobei der Strömungskanal einen konischen Abschnitt (14) umfasst.

5. Mikrochip (1) nach Anspruch 1, wobei
der Strömungskanal ein erstes Ende distal zum Auslassteil (12) und ein zweites Ende in der Nähe des Auslassteils (12) umfasst;
der Auslassteil (12) in der zweiten Substratschicht (1b) ausgebildet ist; und
der erste Abschnitt des Strömungskanals sich vom ersten Ende zum zweiten Ende derart verjüngt, dass der erste Teil vor dem Auslassteil (12) endet.

6. Mikrochip (1) nach Anspruch 1, ferner umfassend
einen Probeneinlass (M1), der zum Einführen einer Probe in einen Probenkanal (M11) verwendet wird, wobei der Probenkanal (M11) in nur der einen von der ersten Substratschicht (1a) oder der zweiten Substratschicht (1b) ausgebildet ist, in der der Auslassteil (12) ausgebildet ist, derart, dass der Probenfluss aus dem Probenkanal (M11) direkt vom Probenkanal (M11) durch den Strömungskanal zur Öffnung fließt.

7. Mikrochip (1) nach Anspruch 1, ferner umfassend:
einen ersten hohlraumbildenden Teil(12a), der einen Endabschnitt der ersten Substratschicht (1a) bildet; und
einen zweiten hohlraumbildenden Teil(12b), der einen Endabschnitt der zweiten Substratschicht (1b) bildet;
wobei eine Innenseite des ersten hohlraumbildenden Teils (12a) von einer Innenseite des zweiten hohlraumbildenden Teils (12b) beabstandet ist.

8. Mikrochip (1) nach Anspruch 7, wobei
der erste hohlraumbildende Teil (12a) an der ersten Substratschicht (1a) derart angebracht ist, dass sich der erste hohlraumbildende Teil (12a) von der ersten Substratschicht (1a) weg in eine Richtung parallel zu der ersten und der zweiten Substratschicht (1a, 1b) erstreckt; und
der zweite hohlraumbildende Teil (12b) an der zweiten Substratschicht (1b) derart angebracht ist, dass sich der zweite hohlraumbildende Teil (12b) von der zweiten Substratschicht (1b) weg in eine Richtung parallel zu der ersten und der zweiten Substratschicht (1a, 1b) erstreckt.

9. Mikrochip (1) nach Anspruch 7, wobei ein Hohlraum (12c) durch die Innenseite des ersten hohlraumbildenden Teils (12a) und die Innenseite des zweiten hohlraumbildenden Teils (12b) ausgebildet ist.

10. Mikrochip (1) nach Anspruch 9, wobei
ein erster Abschnitt des Hohlraums (12c) in der Innenseite des ersten hohlraumbildenden Teils (12a) ausgebildet ist; und
ein zweiter Abschnitt des Hohlraums in der Innenseite des zweiten hohlraumbildenden Teils (12b) ausgebildet ist.

11. Mikrochip (1) nach Anspruch 10, wobei
der erste Abschnitt und der zweite Abschnitt des Hohlraums in einer ersten Richtung senkrecht zu der ersten und der zweiten Substratschicht (1a, 1b) bilateral symmetrisch sind; und
der erste Abschnitt und der zweite Abschnitt des Hohlraums in einer zweiten Richtung parallel zu der ersten und zweiten Substratschicht (1a, 1b) bilateral symmetrisch sind.

12. Mikrochip (1) nach Anspruch 10, wobei
eine erste Länge des Hohlraums in einer ersten Richtung senkrecht zu der ersten und der zweiten Substratschicht (1a, 1b) länger ist als eine erste Länge des Auslassteils (12) in der ersten Richtung;
eine zweite Länge des Hohlraums in einer zweiten Richtung parallel zu der ersten und der zweiten Substratschicht (1a, 1b) länger ist als eine zweite Länge des Auslassteils (12) in der zweiten Richtung; oder beides.

13. Mikropartikelmesseinrichtung, umfassend:
einen Mikrochip (1) nach Anspruch 1.

## Revendications

1. Micropuce (1) comprenant :
un substrat comportant un canal d'écoulement configuré pour transporter un fluide à l'intérieur de celui-ci, le substrat comprenant :
une première couche de substrat (1a) ;
une seconde couche de substrat (1b) stratifiée sur la première couche de substrat (1a) pour créer le canal d'écoulement, le canal d'écoulement comprenant une première partie formée dans la première couche de substrat (1a) et une seconde partie formée dans la seconde couche de substrat (1b) ; et
une partie d'évacuation (12) étant formée dans une seule de la première couche de substrat (1a) ou de la seconde couche de substrat (1b), la partie d'évacuation (12) :
comportant une ouverture orientée vers une face d'extrémité du substrat ; et
étant conçue pour éjecter le fluide s'écoulant dans le canal d'écoulement, **caractérisée en ce que** la partie d'évacuation (12) a une forme quadrangulaire.

2. Micropuce (1) selon la revendication 1, dans laquelle la partie d'évacuation (12) est conçue pour éjecter le fluide dans une cavité (15).

3. Micropuce (1) selon la revendication 1, dans laquelle la partie d'évacuation (12) est bilatéralement symétrique dans une direction perpendiculaire aux première et seconde couches de substrat (1a, 1b).

4. Micropuce (1) selon la revendication 1, dans laquelle le canal d'écoulement comprend une partie conique (14).

5. Micropuce (1) selon la revendication 1, dans laquelle :
le canal d'écoulement comprend une première extrémité distale par rapport à la partie d'évacuation (12) et une seconde extrémité proximale à la partie d'évacuation (12) ;
la partie d'évacuation (12) est formée dans la seconde couche de substrat (1b) ; et
la première partie du canal d'écoulement se rétrécit à mesure qu'elle s'étend de la première extrémité à la seconde extrémité, de sorte que la première partie se termine avant la partie d'évacuation (12).

6. Micropuce (1) selon la revendication 1, comprenant en outre :
une entrée d'échantillon (M1) utilisée pour introduire un échantillon dans un canal d'échantillon (M11), dans laquelle le canal d'échantillon (M11) est formé uniquement dans l'une de la première couche de substrat (1a) ou de la seconde couche de substrat (1b) dans laquelle la partie d'évacuation (12) est formée, de sorte que le flux d'échantillon provenant du canal d'échantillon (M11) s'écoule directement du canal d'échantillon (M11) à travers le canal d'écoulement jusqu'à l'ouverture.

7. Micropuce (1) selon la revendication 1, le substrat comprenant :
une première partie formant une cavité (12a) formant une partie d'extrémité de la première couche de substrat (1a) ; et
une seconde partie formant une cavité (12b) formant une partie d'extrémité de la seconde couche de substrat (1b) ;
dans laquelle un côté intérieur de la première partie formant une cavité (12a) est espacé d'un côté intérieur de la seconde partie formant une cavité (12b).

8. Micropuce (1) selon la revendication 7, dans laquelle :
la première partie formant une cavité (12a) est montée sur la première couche de substrat (1a), de sorte que la première partie formant une cavité (12a) s'étend à l'écart de la première couche de substrat (1a) dans une direction parallèle aux première et seconde couches de substrat (1a, 1b) ; et
la seconde partie formant une cavité (12b) est montée sur la seconde couche de substrat (1b), de sorte que la seconde partie formant une cavité (12b) s'étend à l'écart de la seconde couche de substrat (1b) dans une direction parallèle aux première et seconde couches de substrat (1a, 1b).

9. Micropuce (1) selon la revendication 7, dans laquelle une cavité (12c) est formée par le côté intérieur de la première partie formant une cavité (12a) et le côté intérieur de la seconde partie formant une cavité (12b).

10. Micropuce (1) selon la revendication 9, dans laquelle :
une première partie de la cavité (12c) est formée dans le côté intérieur de la première partie formant une cavité (12a) ; et
une seconde partie de la cavité est formée dans le côté intérieur de la seconde partie formant une cavité (12b).

11. Micropuce (1) selon la revendication 10, dans laquelle :
la première partie et la seconde partie de la cavité sont bilatéralement symétriques dans une première direction perpendiculaire aux première et seconde couches de substrat (1a, 1b) ; et
la première partie et la seconde partie de la cavité sont bilatéralement symétriques dans une seconde direction parallèle à la première et à la seconde couche de substrat (1a, 1b).

12. Micropuce (1) selon la revendication 10, dans laquelle :
une première longueur de la cavité dans une première direction perpendiculaire aux première et seconde couches de substrat (1a, 1b) est plus longue qu'une première longueur de la partie d'évacuation (12) dans la première direction ;
une seconde longueur de la cavité dans une seconde direction parallèle aux première et seconde couches de substrat (1a, 1b) est plus longue qu'une seconde longueur de la partie d'évacuation (12) dans la seconde direction ; ou les deux.

13. Appareil de mesure de microparticules comprenant :
une micropuce (1) selon la revendication 1.
